# EUROPEAN PATENT APPLICATION

(11) **EP 4 589 200 A1**
(43) Date of publication of application: **23.07.2025**
(21) Application number: 24153185.4
(22) Date of filing: 22.01.2024
(51) Int. Cl.: F24D 3/14, B32B 3/30, B32B 15/20, E04C 2/52, F16L 3/02, F24D 13/02

(54) **A METHOD OF MANUFACTURING A PANEL, A PANEL AND THE USE OF SUCH PANEL**

(71) Applicant: Flooré AB, 841 75 Torpshammar (SE)
(72) Inventor: Edfeldt, Lars, 841 72 Fränsta (SE)
(74) Representative: AWA Sweden AB

(57) **Abstract**

A method of manufacturing a panel to be used in a heating and/or cooling system is provided. The method comprises the steps of: providing a panel element (2) having a first pair of opposing side edges and a second pair of opposing side edges; arranging at least two grooves (8) in a top wall (5) of the panel element (2), said grooves (8) extending between the first pair of opposing side edges; arranging a web (7) of thermally conductive material across the top wall (5) of the panel element (2) in a direction from a first side edge to a second side edge of the second pair of opposing side edges; and pressing the web (7) into the at least two grooves (8). Also a panel (1) is provided.

## Description

### Technical field

The present invention refers to a method of manufacturing a panel to be used in a heating and/or cooling system, a panel to be used in a heating and/or cooling system, and the use of such panel as a floor element, a wall element or a ceiling element for heating and/or cooling.

### Technical background

Heated or cooled floor installations are well known in the art. One way of providing this is to arrange an element in a loop pattern to a plaster netting that has been fixated, e.g., by gluing on top of a supporting structure. The element can be an electrical heating cable, or a pipe configured to be part of a fluid circuit containing a re-circulating fluid. The cable or pipe is fixated to the plaster netting by an adhesive och mechanically with clips or cable/pipe ties. The plaster netting together with the fixated cable or pipe is then embedded and covered completely with plastering material. When the plastering has been cured, a final surface layer may be laid out. This may by way of example be ceramics or the like. This method is, apart from being time consuming, considered as a permanent installation which also involves many risks. There is a risk that the cable or pipe is laid down with the wrong spacing and/or with a too small bending radius. The latter involves a risk of cable or pipe breakage. Further, the method is time consuming since it takes a long time for drying and curing before the cable or pipe can be used. Not at least, this method does not allow any recycling.

Another alternative method, which allows a faster installation is to use panels with pre-formed grooves. The panels are arranged on top of the supporting structure and secured by glue, tape or plastering material. Then, the cable or pipe is pushed into the grooves and thereby removably attached to the panels. The cable or pipe is fully contained in the grooves. The top surface material, such as clinker or floorboards, can be arranged on top of the thus formed foundation. This allows an overall simplified and faster installation process with a well-controlled cable or pipe pattern. Also, it allows a simplified recycling since the cable or pipe is not embedded in any plastering material.

There is however a need for an even higher degree of sustainability which takes the whole lifecycle chain into consideration.

### Summary

It is an object of the present invention to provide a panel that allows a simplified and faster installation process.

Another object is to provide a panel that allows a high energy efficiency and a low heating inertia when used in a heating and/or cooling system. The panel should be able to be used no matter if it is on a floor, a wall or a ceiling.

Yet another object is to provide a panel that allows an easy recycling.

Another object is to provide a method for manufacturing such panel.

These and other objects that will be apparent from the following summary and description are achieved by a method, by a panel and by the use of such panel as prescribed by the appended claims.

The skilled person realizes that a heating and/or cooling system, i.e., a comfort heating system, can be operated either by electricity or by a using tempered fluid. In the event of electricity, the panel will be used together with an electrical cable. In the event of a tempered fluid, a pipe will be used. The term pipe will be used in the following description. The terms pipe and cable are however used interchangeably unless nothing else is specifically given.

According to a first aspect of the present invention, there is provided a method of manufacturing a panel to be used in a heating and/or cooling system, the method comprising the steps of:
providing a panel element having a first pair of opposing side edges and a second pair of opposing side edges;
arranging at least two grooves in a top wall of the panel element, said grooves extending between the first pair of opposing side edges;
arranging a web of thermally conductive material across the top wall of the panel element in a direction from a first side edge to a second side edge of the second pair of opposing side edges; and
pressing the web into the at least two grooves.

Accordingly, a method is provided where the web of thermally conductive material is applied to the panel element as a continuous web, where the web is not only extending continuously across the top wall of the panel element but also continuously along the envelope wall of each of the at least two grooves. By arranging the web of thermally conductive material across the top wall of the panel element in a direction transverse the longitudinal extension of the at least two grooves, the web will easily follow the envelope wall of the respective groove without any undue formation of wrinkles in the web material. Additionally, the web can be pressed into the groove to follow the full envelope surface of the respective groove. The web can be rolled out from a roll or be provided as a sheet. In case of rolling out the web from a roll, the rolling direction preferable coincides with the direction transverse the longitudinal extension of the at least two grooves.

This will result in a panel that allows a simplified and more speedy installation process for the end user of the panel. The user can simply layout the pipe directly into the groove without the need for any cutting of the heat conducting web to get access to the groove. This saves installation time. Further, since there is no cutting of the web of thermally conductive material, there will be a continuous heat transferring surface across the full top surface of the panel, including along the envelope surface of each of the at least two grooves. This should be compared to prior art panels where the thermally conductive web is cut along each groove to allow the pipe to be pressed into the groove. The cut will result in a gap between the resulting cut edges, where the width of the gap depends on the cross-sectional geometries and dimensions of the groove and pipe respectively. The further into the groove the pipe is pressed, the wider the gap. The gap will work as an insulator in an installed heating and/or cooling system. The gap provides a high thermal inertia and hence a reduced efficiency with high energy losses. With a panel that results from the method of the invention, there will be a continuous extension of thermally conductive material across the full top surface of the panel, including along the envelope wall of each and one of the at least two grooves. Hence, the panel according to the invention will provide a very low thermal inertia. The invention will also provide a quick and efficient heat transfer response. Not only will the heat transferring be non-broken, but it also allows, depending on the cross-sectional geometries and dimensions of the groove and pipe respectively, a larger contact surface between the envelope surface of the pipe and the thermally conductive material. This will allow an overall improved heat transferring efficiency for a heating and/or cooling system using such panels and hence substantial energy savings when using such installation.

As a non-limiting example, the web of thermally conductive material may be formed by Aluminium foil. As a non-limiting example, an Aluminium foil may have a thickness of max 0.2 mm. The thickness depends on the type of material in the web. The web may depending on material by way of example have a thickness in the range of 0.05 -1.0 mm and more preferred 0.08-0.5 mm.

The at least two grooves may by way of example have a straight linear extension between the first pair of opposing side edges. The opposing free ends of the respective groove will be open. The at least two grooves may by way of example be formed by milling or pressing. Thus, the grooves may be seen as recesses in the top wall of the panel element. The grooves do preferably have a depth that corresponds to or exceeds the width of a pipe to be arranged in the respective groove. The pipe may thereby be fully countersunk in the groove.

The web of heat conducting material may be pressed into the respective groove by using a bar that is lowered into the groove and thereby forces the web into the groove.

The steps of arranging the web of thermally conductive material across the top wall of the panel element and pressing the web into the at least two grooves may be performed simultaneously. The web of thermally conductive material may be pulled from a roll of thermally conductive material as the web is pressed into the at least two grooves.

The step of arranging the web across the top wall of the panel element may comprise securing the web in a vicinity of each of the at least two grooves. The operation of pressing the web into the at least two grooves, to allow the web to follow the envelope wall of the respective groove, may thereby be facilitated. The securing may by way of example be made by adhesive bonding. In the event of adhesive bonding, the securing may be made by lowering a heated tool into engagement with the web in the vicinity of the groove, thereby causing a local melting of a pre-arranged adhesive, such as a hot melt adhesive. Alternatively, the securing may be made mechanically, e.g., by stapling.

The web may, for each of the at least said two grooves, be a web that is secured in a vicinity of a respective groove prior to pressing the web into said groove. The securing may be made by adhesive bonding. Alternatively, the securing may be made mechanically, e.g., by stapling.

In the event of using adhesive bonding, the adhesive may be applied either to the lower surface of the web or to the top surface of the panel element. The adhesive may be pre-applied to the web and/or to the panel element. Alternatively, the adhesive may be applied simultaneously when applying the web. No matter when the adhesive is applied, it may be applied e.g., by spraying or printing. The adhesive may be a hot melt adhesive. No matter application, the adhesive may have a full surface covering or be applied in a pattern. The latter facilitates separation of the web from the panel element during a future recycling of the panel since a lower pulling force is required to separate the web from the panel element.

The web may be secured to the top wall of the panel element only. Hence, it is not necessary for the web to be secured to the panel element along the envelope wall of a groove.

The web may be secured in a vicinity of a first groove and pressed into said first groove before being secured in a vicinity of a subsequent second groove.

The web may, as seen along its width and as seen in a direction transverse the longitudinal extension of a groove, be pressed to extend along substantially the full extension of the envelope wall of the groove. This allows an enlarged contact area between the web and the envelope wall of a pipe to be received in the groove.

The web may be adhesively secured across the surface extension of the top wall of the panel element by using a heated pressure plate in combination with an adhesive being applied to either the web or to the top wall of the panel element. The adhesive may be a hot-melt adhesive. The adhesive may have a full surface covering or be applied in a pattern. The latter facilitates separation of the web from the panel element during a future recycling of the panel. By applying the adhesive in a printed pattern, a gripping tab may be formed along a free edge of a web.

Two or more webs of thermally conductive material may be arranged in parallel across the top wall of the panel element in a direction from a first side edge to a second side edge of the second pair of opposing side edges, wherein said two or more webs are arranged with an overlap or without an overlap. Using two or more webs may facilitate the arranging of the web on the top surface of the panel element and also the pressing of the web into the respective groove. In the event of two or more webs, an overlap between the webs ensures the provision of a continuous heat transferring surface across the panel element.

According to another aspect, a panel to be used in a heating and/or cooling system is provided.

The panel comprises a panel element having a first pair of opposing side edges and a second pair of opposing side edges, and at least two grooves in a top wall of the panel element, said grooves extending between the first pair of opposing side edges;
a web of thermally conductive material extending across the top wall of the panel element in a direction from a first side edge to a second side edge of the second pair of opposing side edges, said web extending into each of the at least two grooves and along the envelope wall of each of the at least two grooves; and
wherein the web is secured to at least the top wall of the panel element.

The advantages and the functionality of the panel have been thoroughly discussed above in view of the method of manufacturing such panel. These arguments are equally applicable to the resulting panel. Reference is made to the discussion above to avoid undue repetition.

The panel may further comprise a curved connecting groove extending between and interconnecting two adjacent grooves, said connecting groove being arranged in the top wall of the panel element in an area adjacent a side edge in the first pair of opposing side edges, and wherein the at least one web of thermally conductive material extends across the connecting groove and in level with the top wall.

The connecting groove may be formed as a single-curved groove where the ends thereof merge with the two adjacent parallel grooves to thereby form a continuous loop. The curvature of the connecting groove preferably has a radius that allows a pipe to be received in the groove with a predetermined bending radius.

Both side edges in the first pair of opposing side edges of the panel element may be provided with a connecting groove. This allows a pipe to be arranged in a meandering pattern across a single panel or across a plurality of adjacent panels during an installation process. Also, by the parallel grooves having open, free ends along the side edges in the first pair of opposing side edges of the panel element, a pipe may be arranged to extend between two or more panels that are arranged one after the other in an installation.

The web of thermally conductive material does not extend into the curved connecting groove(s), but only in level with the top wall of the panel element. Hence, the web covers the connecting groove(s). Depending on the desired layout of the floor, wall or ceiling to be covered with panels in an installation, the user may decide on the meandering pattern of the pipe on his own discretion. At the user's choice, the web may be cut along the relevant curved connecting portions only. This will cause a strict local reduction in heat transfer efficiency as compared to prior art panels where the web must be cut along the full extension of the pipe receiving groove/grooves.
Each groove, as measured in level with the top wall of the panel element, may have a groove width as seen transverse a longitudinal extension of the respective groove, where the groove width is 80-100% and more preferred 90-99% of a width of a pipe intended to be received in said groove. By having a width as measured in level with the top wall of the panel element that is smaller than the width of the pipe to be received in the groove, the groove may be seen as having an omega-shaped cross-sectional profile. This allows the pipe to be pushed into the groove and be held in place inside the groove without the need for any clips, tape or locking means. This saves times during installation. This design further enhances the contact between the pipe and the web, which enables maximized heat conduction from the pipe across the top envelope element, to the adjacent surrounding. It may also remove the size of any air pockets that may be formed between the pipe and web that may deteriorate this heat transfer. Air-pockets may even be avoided.

The panel element may by way of example be made of organic material, cellular plastic, plaster board, fibre board, cardboard, stone, cement or glass wool. Non-limiting examples of organic materials are wood, cork, foamed PLA (polylactic acid) and foamed maize. Non-limiting examples of cellular plastics are PIR (polyisocyanurate), PUR (polyurethan), XPS (extruded polystyrene) and EPS (expanded polystyrene). The cardboard may be corrugated cardboard or cardboard having a honeycomb structure. The cardboard may be arranged as lamellas that are arranged side by side to form a lamellar structure.

The panel element may be formed by a plurality of lamellas of corrugated cardboard. The lamellas may be oriented to extend side by side in a thickness direction of the panel element. Also other directions are possible. It has been shown that it is possible to achieve a higher compressive strength as such by using panel elements of corrugated cardboard than of cellular plastics. Compressive strength is of high importance in flooring applications. Further, the lamella structure in combination with the corrugated cardboard has shown to provide an even higher compressive strength than just a single panel of corrugated cardboard.

According to yet another aspect, the invention refers to the use of a panel according to the type described above as a floor element, a wall element or a ceiling element for heating and/or cooling.

The advantages and the functionality of the panel have been thoroughly discussed above in view of the method of manufacturing such panel. These are equally applicable also to the resulting panel and the use thereof. Reference is made to the discussion above to avoid undue repetition.

Further objects and advantages of the present invention will be obvious to a person skilled in the art reading the detailed description given below describing different embodiments.

### Brief description of the drawings

The invention will be described in detail with reference to the schematic drawings.
Fig. 1 discloses, highly schematically one embodiment of a panel.
Figs. 2A and 2B disclose two examples of the extension of a web of thermal conductive material in a groove.
Fig. 3 is a schematic cross section of a groove containing a pipe.
Fig. 4A discloses, highly schematically a panel element formed by a plurality of lamellas of corrugated cardboard.
Fig. 4B discloses, highly schematically, a panel element formed by a honeycomb structure.
Figs 5A-5C highly schematically illustrate a method of producing a panel.
Figs. 6A-6B highly schematically illustrate the use of a panel.

### Detailed description

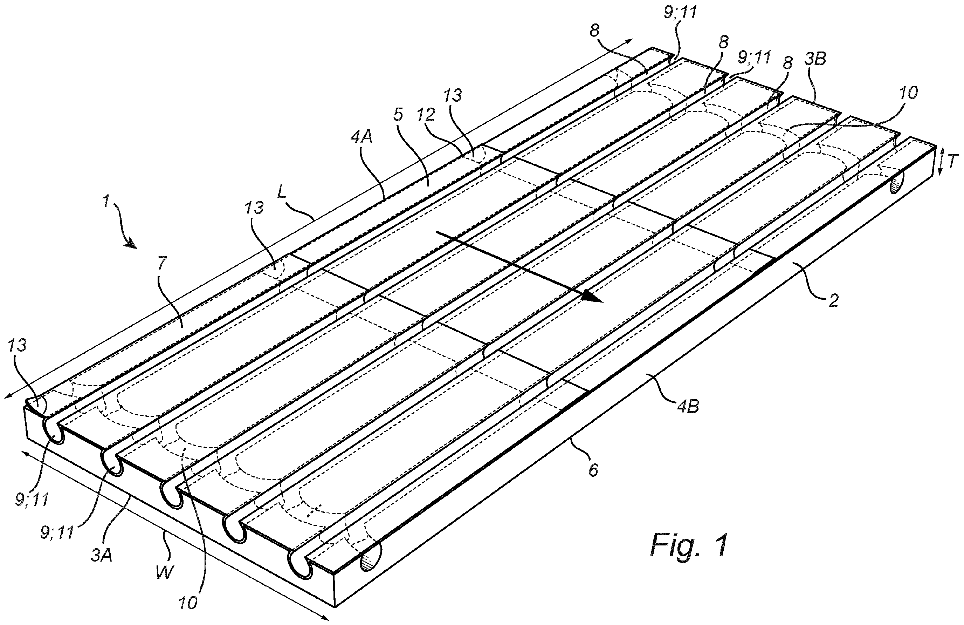

Now turning to Fig. 1, the overall design of a panel 1 according to the invention is disclosed.

The panel 1 comprises a panel element 2 having a first pair of opposing side edges 3A, 3B and a second pair of opposing side edges 4A, 4B. Further, the panel 1 has a top wall 5 and a bottom wall 6. Also, the panel 1 has a thickness T, a width W and a length L. A web 7 of thermally conductive material is arranged across the top wall 5 of the panel element 2. The panel 1 is disclosed as having a rectangular shape. The skilled person realizes that the panel 1 may have other geometries with remained functionality. The panel 1 may by way of example be square. The principle to be described below is equally applicable no matter outer geometry.

The disclosed panel element 2 is in its top wall 5 disclosed as being provided with five parallel grooves 8. The number of grooves 8 may be adapted to the width W of the panel 1. Each groove 8 is formed as a recess in the top wall 5. Each groove 8 extends between the first pair of opposing side edges 3A, 3B. The opposing free ends 9 of the groove 8 are open. Each groove 8 has a straight-linear longitudinal extension. The skilled person realises that other extensions may be used. The grooves 8 are configured to contain a pipe (omitted in Fig. 1) which will be further discussed below.

The center-center (c-c) distance between adjacent grooves 8 is designed to allow a uniform energy transmission across the top wall 5 when the panel 1 is used in a heating and/or cooling system.

The panel element 2 may be made of organic material, cellular plastic, plaster board, fibre board, cardboard, stone, cement or glass wool. Non-limiting examples of organic materials are wood, cork, foamed PLA (polylactic acid) and foamed maize. Non-limiting examples of cellular plastics are PIR (polyisocyanurate), PUR (polyurethan), XPS (extruded polystyrene) and EPS (expanded polystyrene). The cardboard may be corrugated cardboard or cardboard having a honeycomb structure. The cardboard may be arranged as lamellas that are arranged side by side to form a lamellar structure.

The panel element 2 is disclosed as further comprising curved connecting grooves 10 that extend between and interconnects two adjacent grooves 8. The connecting grooves 10 are arranged in the top wall 5 of the panel element 2 in an area adjacent the two opposing side edges 3A, 3B in the first pair of opposing side edges.

Although the panel element 2 is disclosed with connecting grooves in both its opposing ends, the skilled person realises that it is sufficient to arrange connecting grooves in one end only. The skilled person also realises that the panel element 2 may be provided without any connecting grooves.

Each connecting groove 10 is formed as a single-curved groove where the ends thereof merge with the two adjacent parallel grooves 8 to thereby form a continuous groove arrangement. The connecting groove 10 preferably has a radius that allows a pipe to be received in the connecting groove 10 without being subjected to undue bending forces that may cause a breaking of the pipe.

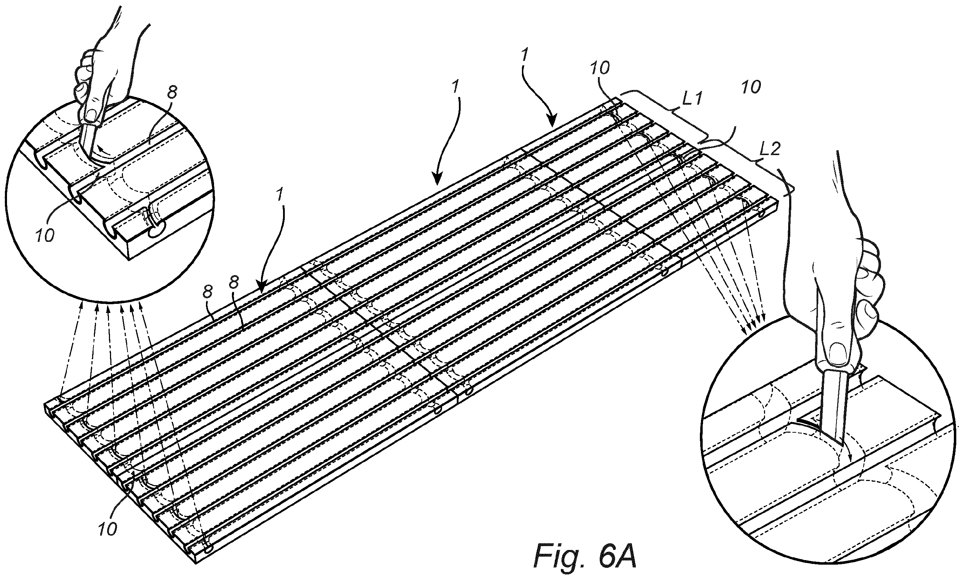

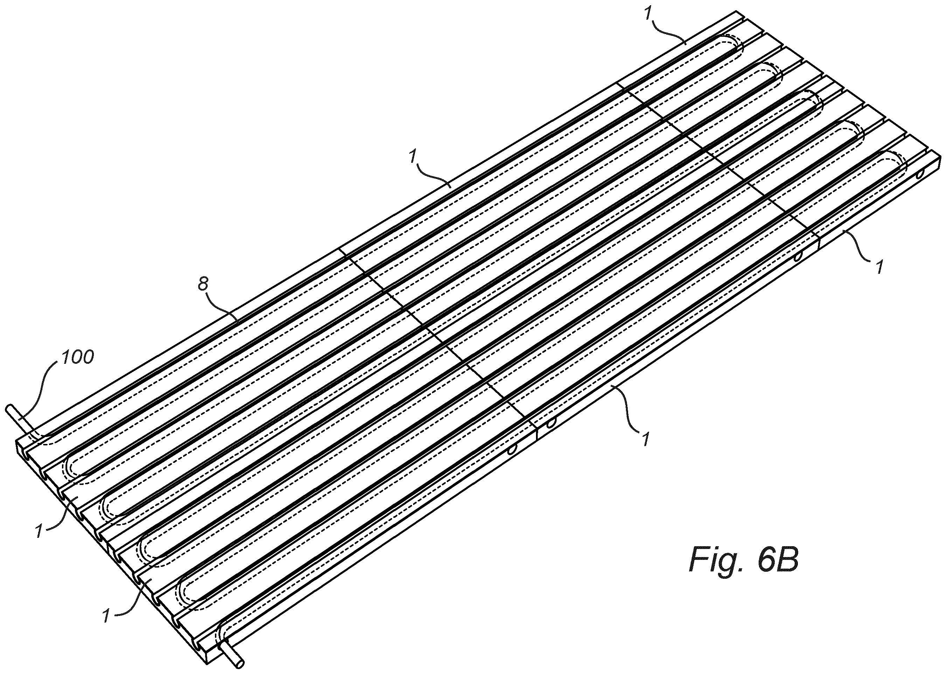

The connecting grooves 10 adjacent the opposing side edges 4A, 4B in the second pair of side edges have curve length corresponding to half the curve length of the connecting grooves 10 that extends between two adjacent parallel grooves 8. When arranging two panels side by side, two adjacent connecting grooves having a half-length will together form a full length. This is best seen in Figs. 6A and 6B.

By the connecting grooves 10 in at least one of the two opposing side edges 3A, 3B of the panel element 2, a pipe may be arranged in a meandering pattern across a single panel 1 or across a plurality of adjacent panels 1 during an installation process. Also, by the parallel grooves 8 having open, opposing free ends 9 along the side edges 3A, 3B in the first pair of opposing side edges of the panel element 2, a pipe may be arranged to extend between two or more panels 1 that are arranged one after the other in an installation.

The web 7 of thermally conductive material extends across the top wall 5 of the panel element 2. The web 7 extends as a continuous web without any interruptions between the first side edge 4A to the second side edge 4B of the second pair of opposing side edges. The web 7 extends in a direction, see arrow, from the first side edge 4A to the second side edge 4B of the second pair of opposing side edges. The web 7 of conductive material further extends into each groove 8 and along their respective envelope walls 11. Additionally, the web 7 extends across the connecting grooves 10 and in level with the top wall 5 of the panel element 2. Hence, the web 7 is not arranged to extend into the connecting grooves 10, but instead the connecting grooves 10 are covered and substantially concealed by the web 7.

As a non-limiting example, the web 7 of thermally conductive material may be formed by Aluminium foil. As a non-limiting example, an Aluminium foil may have a thickness of max 0.2 mm. The thickness depends on the type of material in the web. The web may depending on material by way of example have a thickness in the range of 0.05 - 1.0 mm and more preferred 0.08-0.5 mm.

The panel element 2 may be provided with one single web 7. Alternatively, two or more webs 7 may be arranged in parallel across the top wall 5 of the panel element 2 in a direction from a first side edge 4A to a second side edge 4B of the second pair of opposing side edges. The two or more webs 7 may be arranged with an overlap 12 or without an overlap. Using two or more webs 7 may facilitate the arranging of the web on the top surface 5 of the panel element 2 and also the pressing of the web 7 into the respective groove. In the event of two or more webs 7, an overlap 12 between the webs ensures the provision of a continuous heat transferring surface across the panel element.

The web 7 is secured to at least the top wall 5 of the panel element 2. Accordingly, it must not be secured to the envelope wall 11 of the respective groove 8.

The web 7 may be adhesively or mechanically secured to the panel element 2.

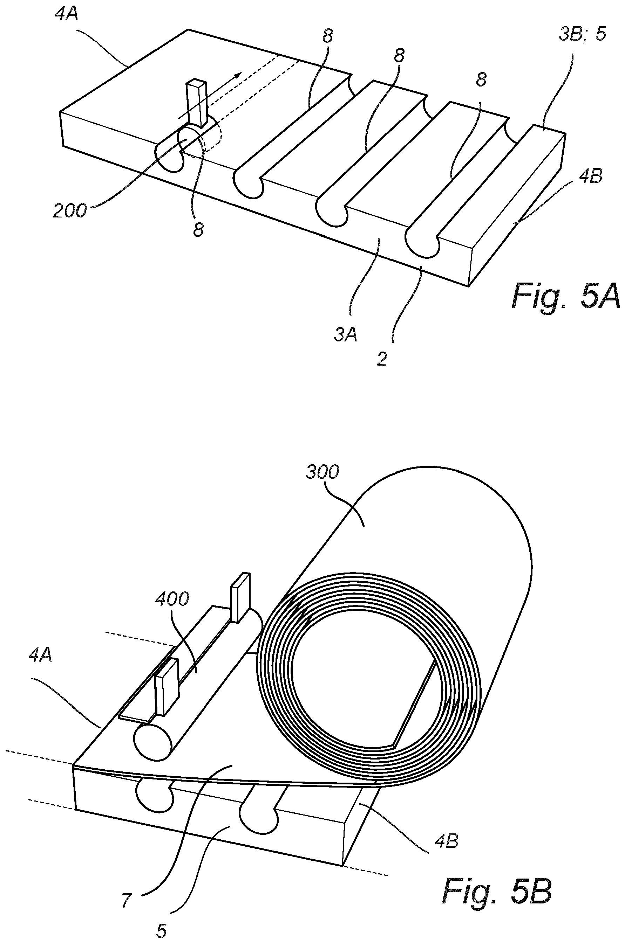

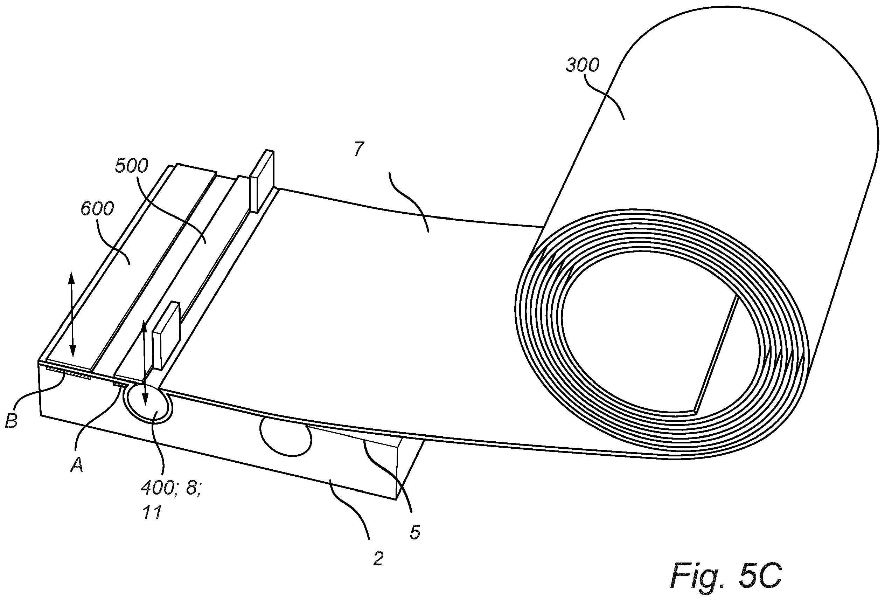

The web 7 may be adhesively secured across the surface extension of the top wall 5 of the panel element 2 by using a heated pressure plate in combination with an adhesive being applied to either the web 7 or to the top wall 5 of the panel element 2. The adhesive may be a hot melt adhesive. This will be discussed below in view of Figs. 5B and 5C. The adhesive may have a full surface covering or be applied in a pattern. The latter facilitates separation of the web 7 from the panel element 2 during a future recycling of the panel 1. By applying the adhesive in a printed pattern, a gripping tab 13 may be formed along a free edge of a web 7.

One non-limiting example of a mechanical securement is the use of staples.

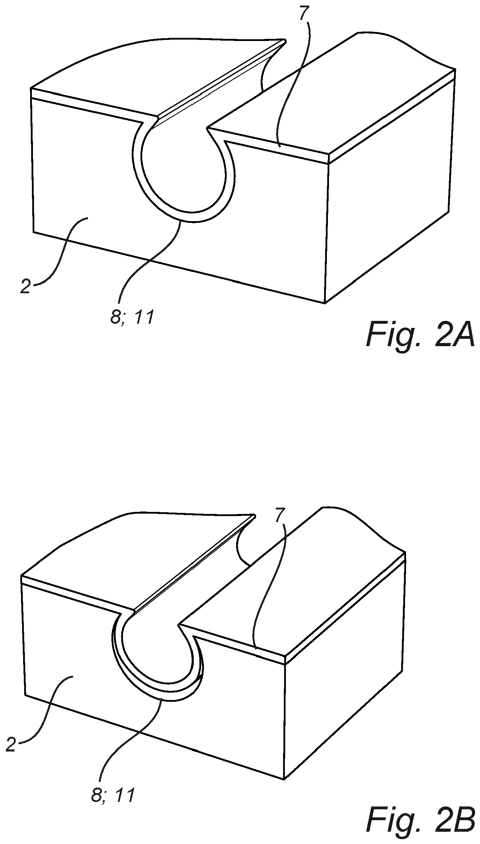

Now turning to Fig. 2A. The web 7 may, as seen along its width and as seen in a direction transverse the longitudinal extension of a groove 8, be pressed to extend along substantially the full extension of the envelope wall 11 of the respective groove 8. Alternatively, as is schematically disclosed in Fig. 2B, the web 7 may, as seen along its width and as seen in a direction transverse the longitudinal extension of a groove 8, be pressed to extend along only a portion of the envelope wall 11 of the groove 8.

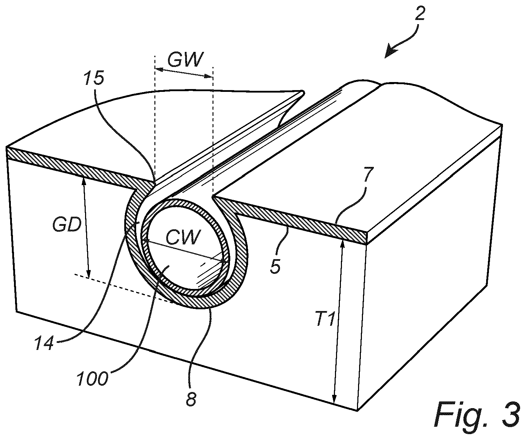

Now turning to Fig. 3, a schematic cross section of one of the grooves 8 is disclosed. A pipe 100 is disclosed as being received inside the groove 8. The pipe 100 is a pipe of the type that is well known in the art in heating and/or cooling applications and is not further discussed.

The groove 8 has a cross-sectional profile with a pipe receiving portion 14 and a mouth portion 15. The mouth portion 15 of the groove 8 has, as measured in level with the top wall 5 of the panel element 2, a groove width GW as seen transverse a longitudinal extension of the groove 8, that is 80-100% and more preferred 90-99% of a width CW of the pipe 100 to be received in the groove 8. This allows the pipe 100 to be pushed into the groove 8 and be held in place inside the pipe receiving portion 14 without the need for any clips, tape or locking means.

The pipe receiving portion 14 may by way of example have a substantially circular cross section. Alternatively, the pipe receiving portion 14 may have other geometries, such as a substantially U-shaped cross section. No matter cross-sectional profile, the pipe receiving portion 14 has a depth GD that allows the pipe 100 to be fully countersunk into the groove 8.

The panel element 2 has a thickness T1 that exceeds the depth GD of the pipe receiving portion 14. The skilled person realises that the depth GD can correspond to or substantially correspond to the thickness T1 of the panel element. The web 7 will in such case contribute to keeping the panel element as an integral element without separation. A foil or tape (not illustrated) may be arranged on the lower side of the panel element.

The grooves 8 may be formed by milling, cutting or by pressing.

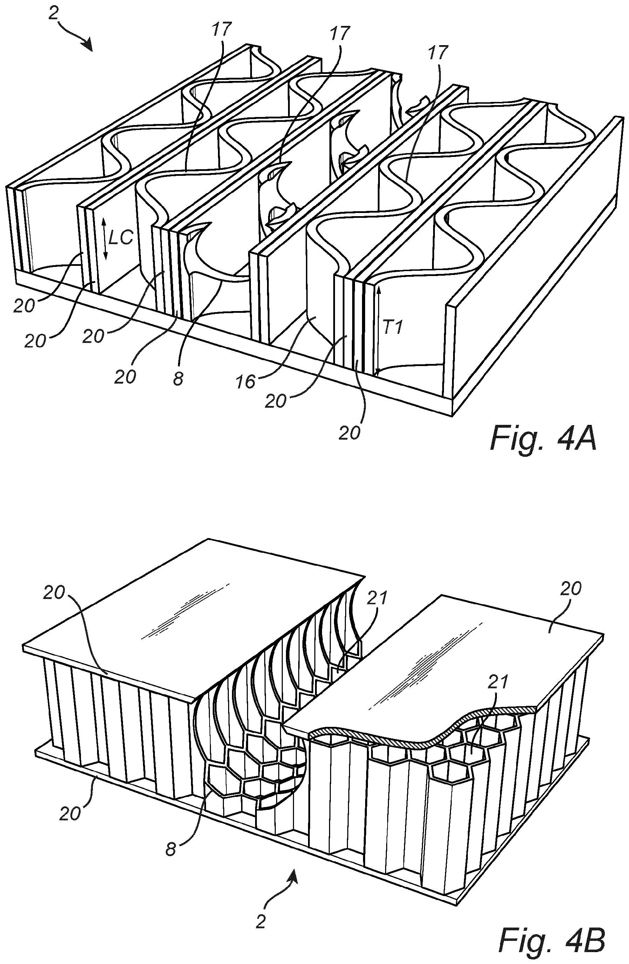

Now turning to Fig. 4A, one alternative embodiment of a panel element 2 is disclosed. The foil 7 has been omitted in the figure to facilitate understanding. The panel element 2 is formed by a plurality of lamellas 16 formed by corrugated cardboard. The lamellas 16 are oriented to extend side by side in a thickness direction T1 of the panel element 2. The lamellas 16 are disclosed as being oriented so that the corrugations 17 have a longitudinal extension LC aligned with the thickness direction T1 of the panel element 2. The groove 8 is formed by milling/cutting/pressing through the lamellar structure.

The skilled person understands that other orientations may be used with the same functionality. The lamellas 16 may by way of example be oriented so that the corrugations 17 have a longitudinal extension LC transverse to the thickness direction T1 of the panel element 2. The corrugations 17 will in that case be turned 90 degrees to the orientation disclosed in Fig. 4A. Also other angles are possible.

It has been shown that it is possible to achieve a higher compressive strength by using panel elements 2 of corrugated cardboard than of cellular plastics. Compressive strength is of high importance in flooring applications. Further, the lamella structure in combination with the corrugated cardboard has shown to provide an even higher compressive strength than just a single panel of corrugated cardboard. The thus formed lamella structure may be covered by an optional liner 20 across one or both of the top and bottom walls of the panel element 2. The figure discloses a liner on the bottom wall only.

The same principle and results may be used by replacing the corrugated cardboard with a board having a honeycomb structure 21. This is exemplified in Fig. 4B. The thus formed cellular structure may be covered by an optional liner 20 across one or both of the top and bottom walls of the panel element 2. The groove 8 is formed by milling/cutting/pressing. The foil 7 has been omitted in the figure to facilitate understanding.

Now turning to Figs. 5A-5C, a method of producing a panel of the type described above will be described. The method comprises the following steps:
Providing, see Fig. 5A, a panel element 2 having a first pair of opposing side edges 3A, 3B and a second pair of opposing side edges 4A, 4B.

Arranging at least two grooves 8 in a top wall 5 of the panel element 2. The grooves 8 are arranged to extend between the first pair of opposing side edges 3A, 3B. The grooves 8 may be formed e.g. by milling. A cutting tool 200 is schematically disclosed.

Arranging, see Fig. 5B, at least one web 7 of thermally conductive material across the top wall 5 of the panel element 2 in a direction from the first side edge 4A to the second side edge 4B of the second pair of opposing side edges. The web 7 can be provided as a blank or as a continuous web from a roll 300.

Pressing, see Fig. 5C, the web 7 of thermally conductive material into the at least two grooves 8. The web may be pressed into the respective groove 8 by using a bar 400 that is lowered into the groove 8 and thereby forces the web 7 into the groove 8. The steps of arranging the web 7 of thermally conductive material across the top wall 5 of the panel element 2 and pressing the web 7 into the grooves 8 may be performed simultaneously. The web 7 of thermally conductive material may be pulled from the roll 300 of thermally conductive material as the web is pressed into the groove 8.

The step of arranging the web 7 across the top wall 5 of the panel element 2 may comprise securing the web 7 in a vicinity A of each of the at least two grooves 8. By securing the web 7 in a vicinity A of each groove, the operation of pressing the web 7 into the groove to allow the web 7 to follow the envelope wall 11 of the groove 8 may be facilitated. The securing may by way of example be made by using a heated pressure plate 500 that is lowered into engagement with the web 7 in the vicinity of the groove as the bar 400 is lowered into the groove 8. The heated pressure plate 500 will cause a local melting of a pre-arranged adhesive, such as a hot melt adhesive. Alternatively, the securing may be made mechanically, e.g., by stapling. In the event of using adhesive bonding, the adhesive may be applied either to the lower surface of the web 7 or to the top surface 5 of the panel element 2. The adhesive may be pre-applied to the web 7 and/or to the panel element 2. Alternatively, the adhesive may be applied simultaneously when applying the web 7. No matter when the adhesive is applied, it may be applied e.g., by spraying or printing. The adhesive may be a hot melt adhesive. No matter application, the adhesive may have a full surface covering or be applied in a pattern. The bar 400 that is used to press the web into the groove may be a heated bar, whereby the web 7 will be secured to the envelope wall 11 of the groove 8. The web 7 may alternatively be secured to the top wall 5 of the panel element 2 only. Hence, it is not necessary for the web 7 to be secured to the panel element 2 along the envelope wall 11 of a groove 8. By using a bar 400, the web 7 will, as seen along its width and as seen in a direction transverse the longitudinal extension of a groove, be pressed to extend along substantially the full extension of the envelope wall of the groove and also along the full longitudinal extension of the groove 8.

The web 7 is secured to the top wall 5 of the panel element 2. This may be made by using a heated plate 600 that is lowered into engagement with the web 7 in an area B across the top wall 5 between two grooves 8. The skilled person realizes that the web 7 may be secured to the top wall 5 between two grooves 8 only.

The web 7 may be secured in a vicinity of a first groove and pressed into said first groove before being secured in a vicinity of a subsequent second groove.

The process described above with arranging and securing the web 7 to the panel element 2 may be executed while moving the panel element past stations with the roll 300, the bar 400 and the heated pressure plates 500, 600. The steps given above are repeated until the full top wall 5 of the panel element 2 is covered by the web 7 and until the web 7 has been pressed into all longitudinally extending grooves 8.

The web 7 of thermally conductive material is not necessarily pressed to extend into the curved connecting groove(s), but is only arranged in level with the top wall 5 of the panel element 2. Hence, the web covers the connecting groove(s).

Now turning to Figs. 6A-6B, the use of a panel 1 as described above will be described. The use will be described in the context of a floor heating system. The skilled person realizes that the panel may equally well be used in a wall application or in a ceiling application, and that the pipe may arranged to provide either heating or cooling. As previously discussed, the skilled person realizes that a heating and/or cooling system, i.e., a comfort heating system, can be operated either by electricity or by a using tempered fluid. In the event of electricity, the panel will be used together with an electrical cable. In the event of a tempered fluid, a pipe will be used.

Starting with Fig. 6A, a plurality of panels 1 are arranged side by side across a floor in order to provide a coverage of the available floor area. The panels 1 are arranged one after the other so that the longitudinally extending, open grooves 8 are arranged in a linear continuous pattern. Also, panels 1 are arranged side by side so that the longitudinally extending open grooves 8 in a first line L1 of panels are arranged in parallel with the longitudinally extending grooves 8 in a second line L2 of panels. The panels 1 may be loosely arranged on top of the floor or be fixed to the floor by any suitable means such as adhesive or the like.

The two outermost panels 1 in each line of panels are adapted in length so that each of the two opposing free ends of the line of panels are provided with connecting grooves 10. As given above, the panels 1 are provided with its connecting grooves 10 covered by the web 7 of thermally conductive material. However, the connecting grooves 10 may be sensed by the fingers or can be seen by the eye as slight indents.

To allow a pipe to be arranged in a meandering pattern along the grooves 8 of the first and second lines of panels, the user makes a cut along the curved connecting grooves 10 that are arranged at the two opposing free ends of the panels 1 in the first and second lines of panels. The thus cut connecting grooves 10 together with the plurality of parallel open grooves 8 will form a continuous meandering groove.

The skilled person realizes that the floor may be covered by a combination of panels having linear grooves 8 only and panels having a combination of linear grooves 8 and connecting grooves 10.

Now turning to Fig. 6B. The pipe 100 is now pushed into the meandering continuous groove to thereby receive a meandering pattern across the area covered by the panels. The pipe 100 will be countersunk in the meandering continuous groove. Also, the pipe 100 will be held in place inside the groove 8 as a result of the cross-sectional profile of the groove having a groove width as measured in level with the top wall of the panel element that is smaller than the width of the pipe to be received in the groove. This allows the pipe 100 to be pushed into the groove and be held in place inside the groove without the need for any clips, tape or locking means.

Since the web of thermally conductive material is applied to the panel element as a continuous web, the web is not only extending continuously across the top wall of the panel element but also continuously along the envelope wall of each of the at least two longitudinally extending grooves. The web is only cut along the connecting grooves along the two opposing side edges of each line of panels. This cutting length is however very short as compared to prior art systems where the web of thermally conductive material is cut along the full length of the meandering pipe. This means that the use of panels according to the present invention allows the provision of a heating and/or cooling system that has very low energy losses as compared to prior art panels where the web must be cut along the full meandering extension of the pipe. The thus formed opposing edges of the cut line will be forced apart as the pipe is pressed into the meandering groove, whereby an insulating gap will be formed along the full extension of the meandering groove. This insulating gap will result in high energy losses due to a fragmented heat transferring area across the panels. With the present invention, insulating gaps will only be formed locally along the connecting grooves.

The panels according to the present invention allows an easy recycling. By arranging the web transverse to the grooves, i.e., typically in the direction of the short side of a rectangular panel, it has been shown that the required separation force will be lowered. Also, by using two or more parallel webs, a lower separation force is required as compared to using a web that has a width corresponding to the full length of the panel element. Additionally, by using a hot-melt adhesive, the separation force may be lowered. Also, by applying the adhesive in a printed pattern, the separation force may be lowered.

It is realized by a person skilled in the art that features from various embodiments disclosed herein may be combined with one another to provide further alternative embodiments.

## Claims

1. A method of manufacturing a panel to be used in a heating and/or cooling system, the method comprising the steps of:
providing a panel element (2) having a first pair of opposing side edges and a second pair of opposing side edges;
arranging at least two grooves (8) in a top wall (5) of the panel element (2), said grooves (8) extending between the first pair of opposing side edges;
arranging a web (7) of thermally conductive material across the top wall (5) of the panel element (2) in a direction from a first side edge to a second side edge of the second pair of opposing side edges; and
pressing the web (7) into the at least two grooves (8).

2. The method of claim 1, wherein the steps of arranging the web (7) of thermally conductive material across the top wall (5) of the panel element (2) and pressing the web (7) into the at least two grooves (8) are performed simultaneously.

3. The method of claim 1 or 2, wherein the step of arranging the web (7) across the top wall (5) of the panel element (2) comprises securing the web (7) in a vicinity of each of the at least two grooves (8).

4. The method of any of claims 1-3, wherein for each of the at least said two grooves (8), the web (7) is secured in a vicinity of a respective groove (8) prior to pressing the web (5) into said groove (8).

5. The method of claim 4, wherein the web (7) is secured in a vicinity of a first groove (8) and pressed into said first groove (8) before being secured in a vicinity of a subsequent second groove (8).

6. The method according to any of the preceding claims, wherein the web (7), as seen along its width and as seen in a direction transverse the longitudinal extension of a groove (8), be pressed to extend along substantially the full extension of the envelope wall (11) of the groove (8).

7. The method according to any of the preceding claims, wherein the web (5) is adhesively secured across the surface extension of the top wall (5) of the panel element (2) by using a heated pressure plate (500) in combination with an adhesive being applied to either the web (7) or to the top wall (5) of the panel element (2).

8. The method according to any of the preceding claims, wherein two or more webs (7) of thermally conductive material are arranged in parallel across the top wall (5) of the panel element (2) in a direction from a first side edge to a second side edge of the two opposing side edges of the second pair of side edges, wherein said two or more webs (7) are arranged with an overlap or without an overlap.

9. A panel to be used in a heating and/or cooling system, the panel (1) comprising:
a panel element (2) having a first pair of opposing side edges and a second pair of opposing side edges, and at least two grooves (8) in a top wall (5) of the panel element (2), said grooves (8) extending between the first pair of opposing side edges;
a web (7) of thermally conductive material extending across the top wall (5) of the panel element (2) in a direction from a first side edge to a second side edge of the second pair of opposing side edges, said web (7) extending into each of the at least two grooves (8) and along the envelope wall (11) of each of the at least two grooves (8); and
wherein the web (7) is secured to at least the top wall (5) of the panel element (2).

10. The panel according to claim 9, further comprising a curved connecting groove (10) extending between and interconnecting two adjacent grooves (8), said connecting groove (10) being arranged in the top wall (5) of the panel element (2) in an area adjacent a side edge in the first pair of opposing side edges, and wherein the at least one web (7) of thermally conductive material extends across the connecting groove (10) and in level with the top wall (5).

11. The panel according to claim 9 or 10, wherein each groove (8), as measured in level with the top wall (5) of the panel element (2), has a groove width as seen transverse to a longitudinal extension of the respective groove (8), where the groove width is 80-100% and more preferred 90-99% of a width of a pipe (100) intended to be received in said groove (8).

12. The panel according to any of claims 9-11, wherein the panel element (2) is made of organic material, cellular plastic, plaster board, fiber board, cardboard, stone, cement or glass wool.

13. The panel according to any of claims 9-11, wherein the panel element (2) is formed by a plurality of lamellas (16) of corrugated cardboard, which lamellas are oriented to extend side by side in a thickness direction of the panel element (2).

14. Use of a panel according to any of claims 9-13 as a floor element, a wall element or a ceiling element for heating and/or cooling.
